# EUROPEAN PATENT SPECIFICATION

(11) **EP 1 665 415 B1**
(45) Date of publication and mention of the grant of the patent: **07.05.2008**
(21) Application number: 04745221.4
(22) Date of filing: 22.07.2004
(51) Int. Cl.: H01M 2/36, H01M 2/04, H01M 10/42

(54) **COVER FOR ELECTRIC ACCUMULATOR AND RELATIVE ELECTRIC ACCUMULATOR**
ABDECKUNG FÜR EINEN ELEKTRISCHEN AKKUMULATOR UND RELATIVER ELEKTRISCHER AKKUMULATOR
COUVERCLE POUR ACCUMULATEUR ELECTRIQUE ET ACCUMULATEUR ELECTRIQUE CORRESPONDANT

(30) Priority: 24.07.2003 IT VI20030148
(43) Date of publication of application: 07.06.2006
(73) Proprietor: Stocchiero, Franco, 36050 Montorso Vicentino (IT)
(72) Inventor: Stocchiero, Franco, 36050 Montorso Vicentino (IT)
(74) Representative: Terreran, Gabrio
(86) International application number: PCT/IT2004/000398
(87) International publication number: WO 2005/011024

(56) References cited:
- EP-A- 0 692 828
- GB-A- 1 019 153
- GB-A- 1 194 215
- GB-A- 1 285 166
- GB-A- 2 004 408
- US-A- 3 708 348

## Description

The invention concerns a cover for an electric accumulator particularly adapted to be used to realise lead accumulators with free acid and the relative electric accumulator.

As known, the casing of an electric accumulator consists of a cover that closes a container provided on the inside with a plurality of dividing walls. These define the cells inside which the electrodes or plates of positive and negative polarity are arranged in intervals.

The plates with the same polarity are electrically connected together, respectively constituting the positive and negative group and as a whole an element.

The various elements are connected in series with each other and their number varies according to the nominal voltage of the accumulator. In the case of a 12V starting accumulator the number of elements and therefore the number of cells is equal to six.

Each element is completely immersed in the electrolyte consisting of a diluted aqueous solution of sulphuric acid.

The cover is in turn provided with a plurality of holes, one for each cell, able to be closed by corresponding sealing caps, which allow the supply of topping up liquids to each cell.

As known, the electrochemical processes that occur during the charging process of the accumulator cause a water consumption that determines a lowering of the level of the electrolyte inside each cell.

In lead accumulators, indeed, during charging voltages are reached at which water separates by electrolysis with the consequent development of its constituent elements, hydrogen and oxygen.

The speed at which the water separates depends upon the kinetics of the hydrogen development reaction at the negative plate, which is directly proportional to the temperature and to the degree of depolarisation with which the reaction itself proceeds.

The amount of water that separates depends upon the method with which the recharging of the accumulator is carried out. More specifically, it depends upon the charge factor understood as the ratio between the amount of electricity supplied to the accumulator during the recharging step and the amount removed by the accumulator during its discharge.

Such a factor depends upon the type of application for which the accumulator is intended.

In traction accumulators the accumulator is frequently discharged and recharged completely and the charge factor can reach up to 1.2. This means that 20% of the amount of electricity supplied during charging is "spent" in the separation reaction of the water.

In accumulators for starting endothermic motors (typically cars, lorries, tractors, etc.), the charge factor is slightly greater than one. However, they are continuously charged by the alternator as the vehicle travels determining significant water consumption through time. Such an undesired effect is also accentuated by the high operating temperatures also due to the ever greater concentration of apparatuses present in the engine space in which the accumulator itself is housed.

Another factor that accelerates the development of hydrogen at the negative plate is the composition of the alloy of the positive plates. Antimony, which historically is the metal most used as binder of the lead both in positive and negative plates, has the drawback of promoting the undesired separation of water during the charging of the lead accumulator.

A first drawback of lead accumulator with free acid described consists of the fact that the level of electrolyte in each cell, which lowers for the aforementioned reasons, must be periodically checked and restored, through the addition of distilled or demineralised water, to avoid the sulphation of the plates and irreparable damage to the accumulator.

In lead traction accumulators, the topping up operation is carried out in a centralised manner with various methods connecting the cells of the accumulator with a topping up circuit fed from an external reservoir. This method, however, cannot be applied to lead starter accumulators. In such a case, the topping up is carried out manually through the filling holes with which the cover is provided.

A further drawback consists of the fact that such maintenance interventions must be carried out with a certain frequency.

Another drawback consists of the fact that such interventions must be carried out hastily in order to avoid the plates being able to emerge from the electrolyte causing damage or loss of efficiency to the accumulator.

In starter accumulators, to reduce water consumption and consequently the number of maintenance interventions per unit time, the prior art has maximised the electrolyte head above the plates and proposed plates realised with lead alloys without antimony.

A first limit to such realisations consists of the fact that the actual reduction in water consumption and consequently of the number of maintenance interventions per unit time depends upon the situations in which the accumulator operates.

Indeed, there is an actual reduction in water consumption only if the charge voltage regulator of the accumulator supplies a constant charge voltage without excess alteration during the whole life of the accumulator and if the temperature of the electrolyte does not exceed determined values, which can easily be exceeded for example in hot seasons.

A further drawback consists of the fact that the absence of antimony has negative effects upon the behaviour of the positive plate and more specifically upon its cyclicality or cyclicity.

The absence of antimony, indeed, reduces the ability of the positive plate to withstand repeated deep discharges as well as decreasing the acceptance of charge of the plate itself.

The purpose of the present invention is to overcome said drawbacks.

In particular, a first purpose of the invention is to realise a cover for lead accumulators with free acid and an accumulator that automatically takes care of restoring the level of electrolyte in each cell.

Another purpose is to realise a cover and a relative accumulator that autonomously takes care of restoring the level of electrolyte without requiring interventions or external apparatuses.

A further purpose is to realise a cover and a relative accumulator that restores the levels of electrolyte in the cells selectively and substantially continuously in time.

Another purpose is to realise a cover and a relative accumulator that keeps the level of electrolyte in the cells substantially constant ensuring the necessary precision and avoiding spilling.

A further purpose is to realise a cover and a relative accumulator that allows the periodic maintenance operation to be simplified.

Another purpose is to realise a lead accumulator with free acid that, with the same characteristics (size, power that can be delivered, etc.) and operating conditions, requires less maintenance interventions per unit time, with respect to analogous conventional accumulators.

A further purpose is to realise a lead accumulator with free acid that has good cyclability of the positive plate.

Another purpose is to realise a cover for lead accumulators with free acid and a relative accumulator that is not subject to losses of electrolyte for example in the case of temporary turning upside down.

The last but not least purpose is to realise a cover for lead accumulators with free acid and a relative accumulator that is cost-effective and simple to realise.

Said purposes are accomplished by a cover for an electric accumulator in accordance with the main claim.

In the same way, said purposes and advantages are accomplished by an electric accumulator in accordance with the corresponding claims.

Advantageously, the proposed solution allows the automatic and simultaneous restoring of the level of electrolyte in each cell to be carried out and therefore allows accumulators to be realised that can also operate in high temperature environments.

Again advantageously, the invention foresees that the reservoir be provided with a filling mouth that allows the reserve of topping up liquid to be renewed.

Again advantageously, the proposed cover allows the number of maintenance interventions per unit time of the accumulator to be substantially reduced and in some cases allows accumulators to be realised that do not require interventions for all of their lifetime.

Again advantageously, the proposed solution allows accumulators to be realised with lead-antimony plates, which whilst conserving their ability to be cyclical, require substantially less maintenance interventions per unit time with respect to analogous conventional accumulators.

Said purposes and advantages shall be highlighted more clearly during the description of some preferred embodiments, given for indicating and not limiting purposes, with reference to the attached tables of drawings, where:
- figure 1 represents a partially sectioned axonometric view of a cover for accumulators object of the present invention, installed on an electric accumulator also object of the present invention;
- figure 2 represents a partially exploded axonometric view of the accumulator and of the cover of figure 1;
- figure 3 represents a plan view of part of the cover and of the accumulator of figure 1;
- figure 4 represents a side view of a partial section of the cover and of the accumulator of figure 3 along the plane B-B;
- figure 5 represents a side view of a partial section of a variant embodiment of the cover and of the accumulator of the invention;
- figure 6 represents a partially sectioned axonometric view of another variant embodiment of the cover and of the accumulator of the invention;
- figure 7 represents a side view of a partial section of the cover and of the accumulator of figure 6;
- figure 8 represents an axonometric view of a further variant embodiment of the cover and of the accumulator of the invention;
- figure 9 represents a plan view of part of the cover and of the accumulator of figure 8;
- figure 10 represents a side view of a partial section of the cover and of the accumulator of figure 8;
- figure 11 represents a side view of a partial section of another variant embodiment of the cover and of the accumulator of the invention;
- figure 12 represents a side view of a partial section of the cover and of the accumulator of figure 1 in a first operating step;
- figure 13 represents a side view of a partial section of the cover and of the accumulator of figure 1 in a further operating step.

Although the described embodiments refer to lead accumulators with free acid it is clear that the proposed solution can also be applied to other types of accumulators.

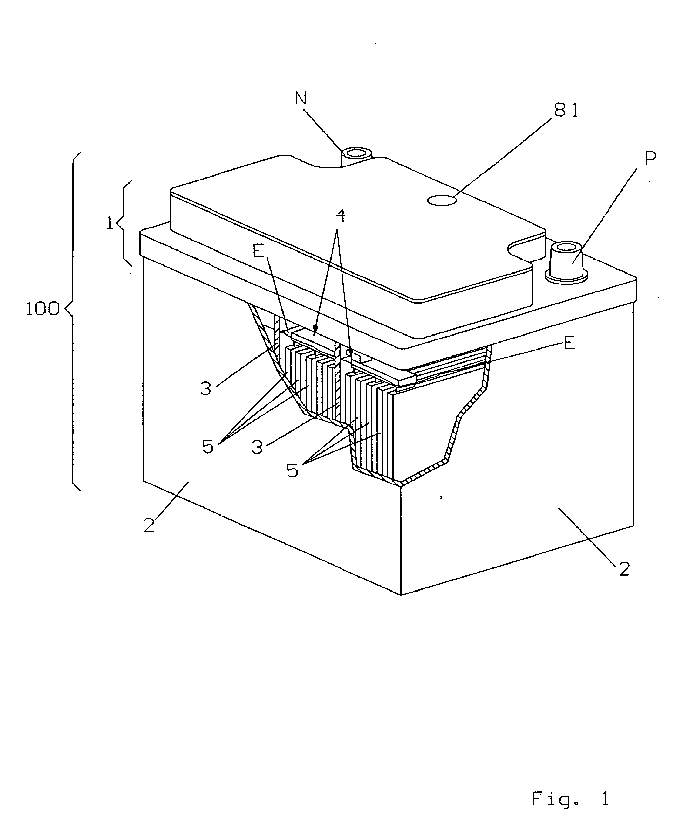

The cover for electric accumulators and the relative accumulator object of the present invention are represented in figure 1, where they are respectively indicated with reference numeral 1 and 100.

The electric accumulator 100 substantially comprises a cover 1 that closes a container 2 at the top, provided on the inside with a plurality of vertical dividing walls 3 that define the cells 4 of the accumulator 100.

Each cell 4 is adapted to contain the electrolyte E and for housing the groups of plates 5, electrically connected together so as to be able to create the positive P and negative N polar terminals of the accumulator 100.

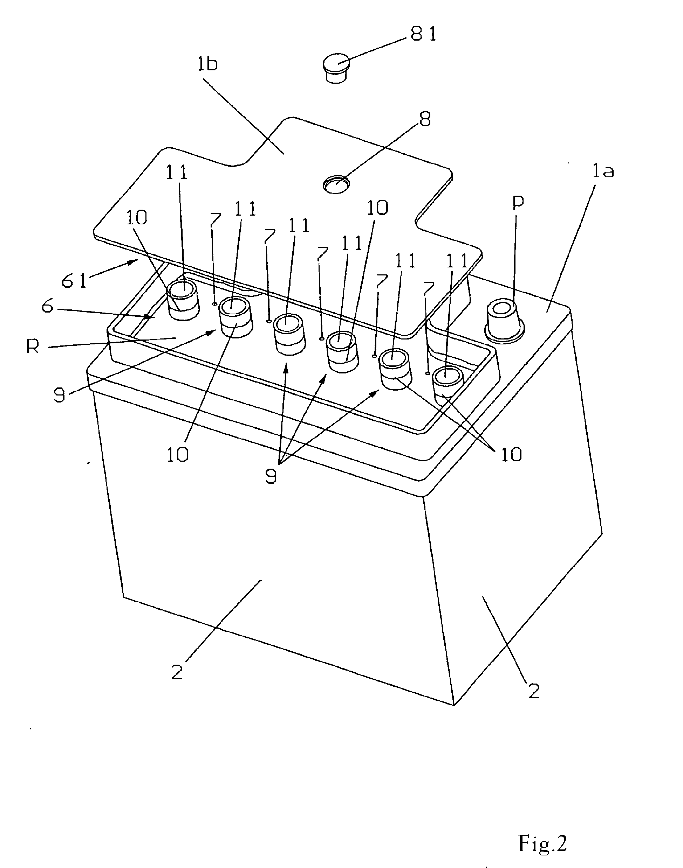

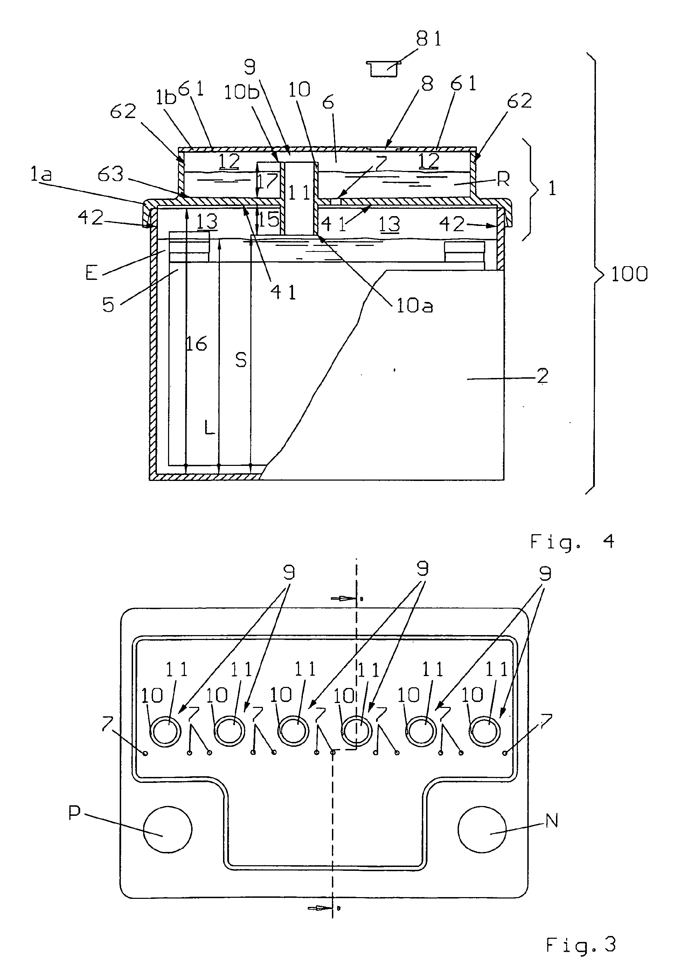

The invention foresees that in the cover 1 a reservoir 6 be defined, visible in figures 2 to 4, adapted to contain a topping up liquid R of the electrolyte E that communicates with each cell 4 through one or more supply ducts 7 of the liquid R and control means of the level L of the electrolyte E in each cell 4, wholly indicated with reference numeral 9, adapted to prevent/allow the flow of the liquid R through the duct 7 when the corresponding level L of the electrolyte E is higher/lower than a predetermined level S, visible in figure 4.

It should also be observed that the reservoir 6 is provided with a filling hole 8 indicated in figure 2, which allows the reservoir 6 to be filled up. Such a filling hole 8 can be closed with a corresponding cap 81 and advantageously allows the reserve of topping up liquid R to be made renewable with a simple and programmable intervention.

As far as the topping up liquid R is concerned, it generally consists of distilled or demineralised water.

The control means 9 of the level L consist of tubular elements 10, the ducts 11 of which place each cell 4 in communication with the reservoir 7 according to the various levels L of electrolyte E.

In particular, each element 10 has the function of hydraulically connecting, or not, according to the level L of electrolyte E, the air chambers 12, 13 that are defined, respectively, in the reservoir 7 and in each cell 4.

The air chamber of the reservoir 12 is defined by the surface of the liquid R, by the upper wall of the reservoir 61, and by the portions of side wall 62 of the reservoir 6, that emerge from the liquid R when the accumulator 100 is in working position.

It should be observed that the upper wall 61 of the reservoir 6 consists of a closing element, realised with a foil 1b, applied by heat sealing or with equivalent means to the main body 1a of the cover 1.

In the same way, each air chamber 13 of each cell 4 is defined by the surface of the electrolyte E, by the upper wall of the cell 41 and by the portions of side wall 42 of the cell 4, which emerge from the electrolyte and when the accumulator 100 is in working position.

As shall be seen more clearly hereafter, the connection between the chambers 12 and 13 is realised when the level L of the electrolyte E is lower than the desired level S.

The desired level S of electrolyte E in each cell 4, is determined by the length 15 of the lower end 10a of the tubular element 10 with respect to the upper wall 41 of the cell 4, as can be seen in particular in figure 4.

More specifically, the level S is equal to the height 16 of each cell 4 minus the length 15.

The length 17 of the upper end 10b of the tubular element 10 with respect to the lower surface 63 of the reservoir 6 also determines the maximum level of topping up liquid R that can be entered into the reservoir 6 itself.

For the control means 9 of the level L to work properly, indeed, it is necessary that such a maximum level never be exceeded.

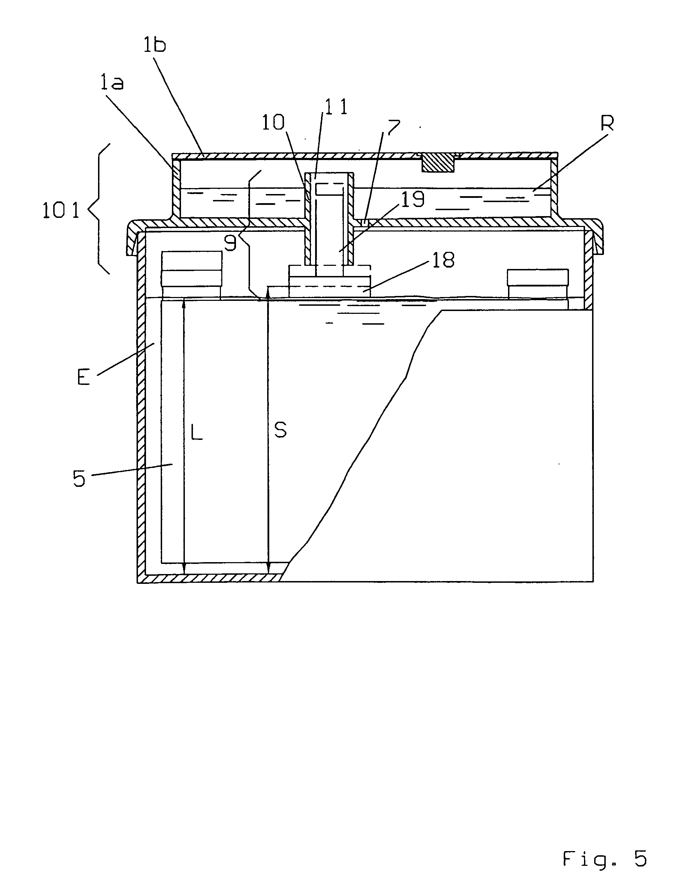

A variant embodiment of the cover object of the invention, wholly indicated with reference numeral 101 in figure 5, differs from the previous one in that the means 9 for detecting and controlling the level L of the electrolyte E comprise a float 18, mechanically connected to a shaft 19, slidably coupled with a guide element, in the example consisting of the tubular element 10.

In such a case, when the level L of the electrolyte E in the cell 4 reaches the desired level S, the duct 11 is intercepted by the upper surface of the float that blocks the flow of liquid R.

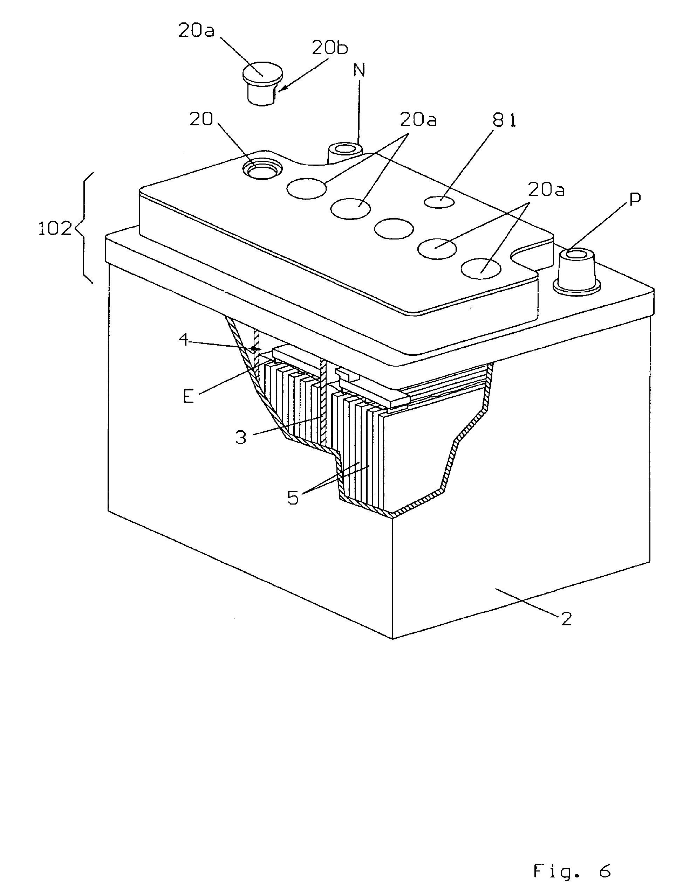

A further variant embodiment represented in figure 6 differs from the previous ones in that the cover 102 is provided with a plurality of inspection and filling holes 20 of the cells 4. More specifically, such holes are realised in correspondence to each tubular element 10, and can be closed through as many closing caps 20a that have openings 20b adapted to not obstruct the duct 11.

In other embodiments, for the sake of brevity not represented, such inspection holes are not arranged at the tubular elements 10.

Again according to the invention, the accumulator is also provided with a discharge duct for the gases that are produced inside each cell 4 during charging.

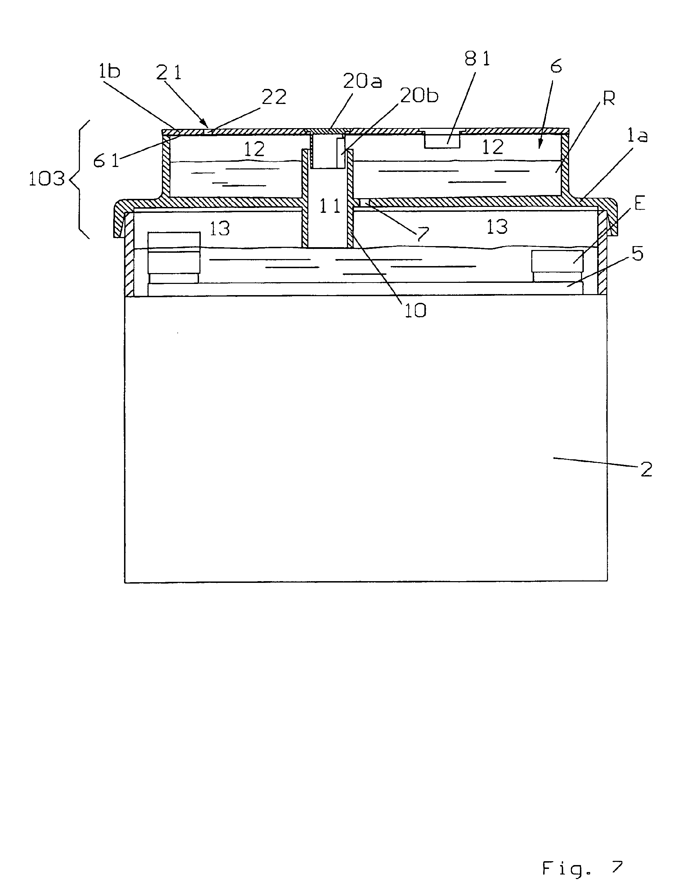

A first cover and the relative accumulator, provided with such a discharge duct 21, is represented in figure 7, where it is wholly indicated with reference numeral 103.

The duct 21 consists of a through hole 22 realised in the cover 103 and more specifically in the closing foil 1b of the cover.

A variant embodiment that is not represented differs from the previous one in that the discharge duct 21 comprises a unidirectional over-pressure valve housed in the through hole 22. More specifically, the over-pressure valve comprises a tubular body closed by a base, removably coupled with a tubular collar realised close to the end of the discharge duct 21.

The gases that form during the electrochemical reactions in the cells 4 are thus discharged into the external atmosphere as soon as the internal pressure reaches the opening value of the unidirectional valve.

The value of the opening pressure of the valve is such as to counteract the pressure exerted by the electrolyte and on the valve itself when the accumulator is turned upside down.

This advantageously allows the leaking of liquid from the accumulator to be prevented, even when it is arranged upside down.

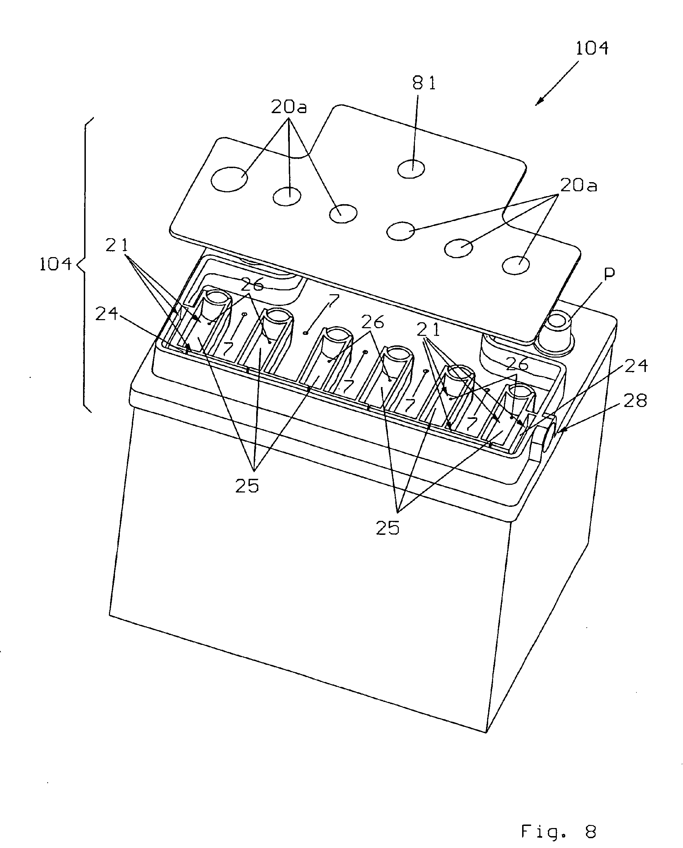

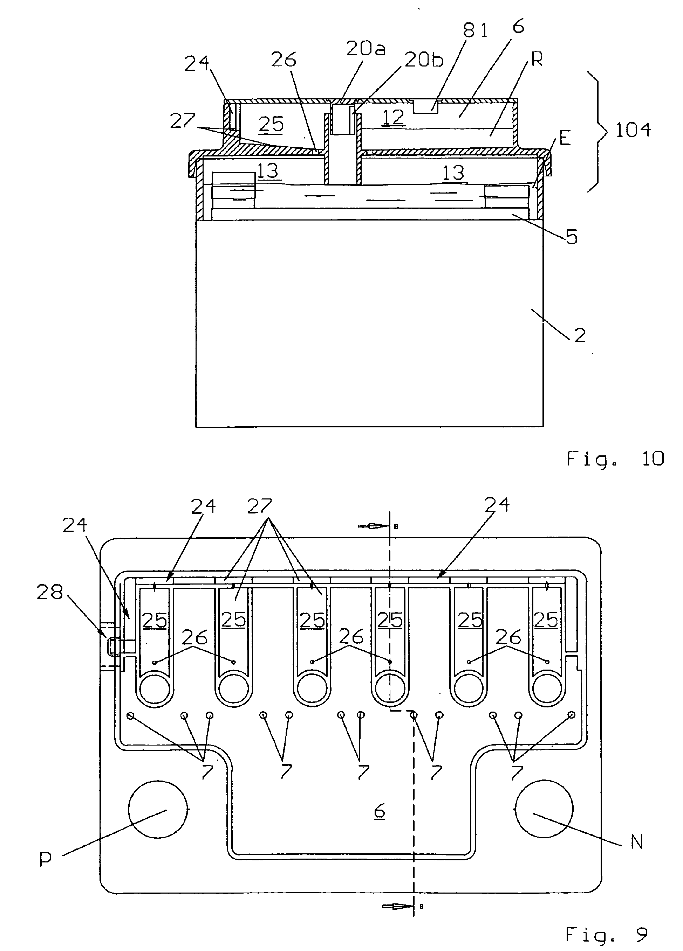

A further variant embodiment of the cover, wholly indicated with 104 in figures 8, 9 and 10, differs from the previous one in that the discharge duct 21 of the gases comprises a collector duct 24 communicating with a plurality of accumulation chambers 25 each communicating with a cell 4 through a corresponding vent channel 26.

The over-pressure valve wholly indicated with reference numeral 28 is arranged at an end of the discharge duct 21.

A further variant embodiment foresees that the valve element cooperates with an anti-explosion device generally consisting of a porous partition of ceramic or plastic material.

The invention also foresees that the lower surface of the accumulation chamber 25 and of the collector duct 24 be provided with tilted planes 27.

Such tilted planes 27 have the function of easing the re-entry of the electrolyte E that can accumulate inside the accumulation chamber 25 or the collector duct 24 following the accidental turning upside down of the accumulator or the condensation of the acid mist carried by the gases that form during charging.

It should also be observed that the accumulation chambers 25 also allow the mixing of the electrolyte E that may have leaked from the cells 4 that is present in the collector duct 24 to be delayed and allow the re-entry into each cell 4 of the electrolyte E that has actually leaked.

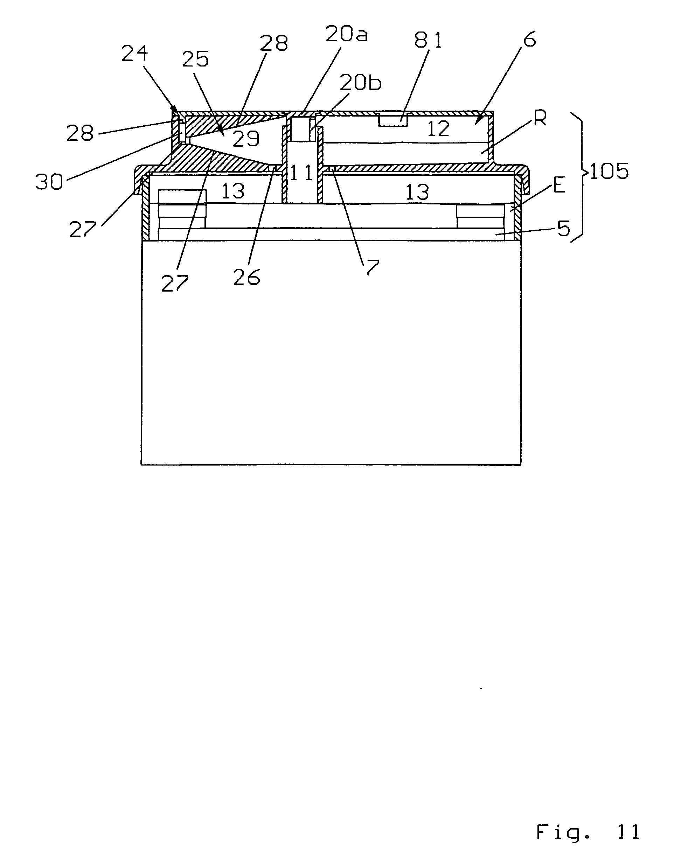

A further variant of the cover and of the relative accumulator, wholly indicated with 105 in figure 11, differs from the previous ones in that the upper surfaces of the accumulation chamber 25 and of the collector duct 24 also consist of tilted planes 28.

Inside the collector duct 24 and the accumulation chamber 25 tanks are thus defined that communicate with each other, indicated with 29 and 30 respectively.

Such tanks 29 and 30 allow the electrolyte E that has leaked from the cells 4 to be held more effectively and allow it to be returned into the corresponding cell 4.

In the case of the accumulator turning upside down, indeed, the liquid leaking from the cells 4 firstly pours into the accumulation chambers 24 gradually filling up the corresponding tanks 29 and then reaches the collector duct 25 filling the tanks 30 where it can be mixed with the liquids E coming from other cells 4.

The assembly of the cover and of the relative accumulators and their operation shall be described hereafter with reference to the first of the described embodiments, represented in figures 1 to 4.

The assembly of the accumulator 100 foresees welding the plate groups 5 together with the corresponding separators and inserting them inside the respective cells 4.

Once the elements have been connected together and the main body 1a of the cover 1 has been welded to the container 2 with heat sealing or equivalent procedures, the polar terminals P and N are welded.

For accumulators that are put on sale in the state charged with acid, one proceeds to forming the plates with known methods and finally to the application of the closing foil 1b.

Finally, one proceeds to filling the reservoir 6 with the liquid R through the filling hole 8 and to the subsequent closing.

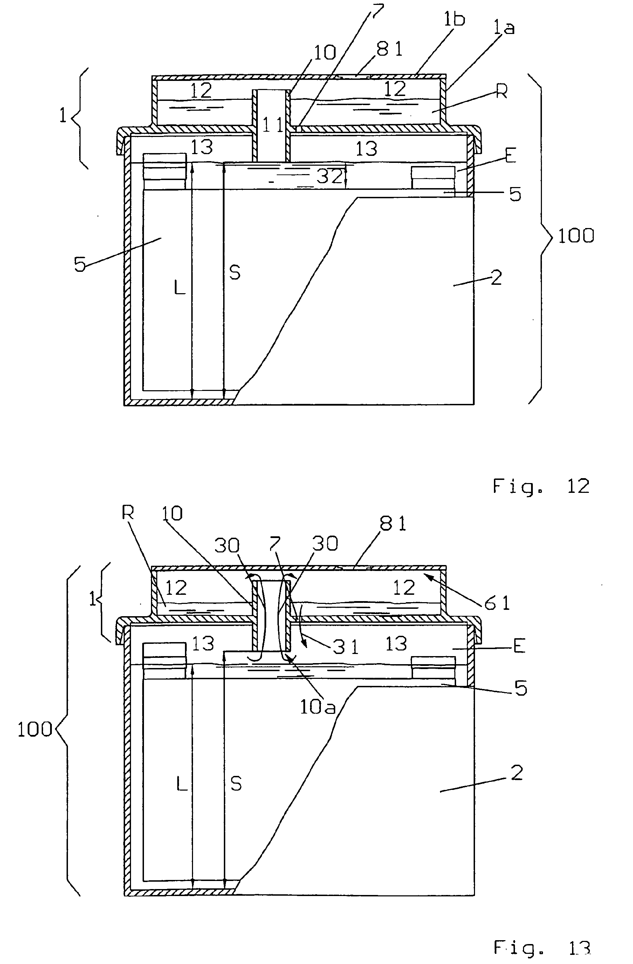

At the end of such operations, the levels of electrolyte E and of topping up liquid R are those represented in figure 12.

The two air chambers 12 and 13 are thus isolated from each other since the duct 11 is obstructed by the electrolyte E itself.

A possible lowering of the level L of the electrolyte E below the predetermined level S of one of the cells 4 places the chamber 12 in communication with the corresponding chamber 13 through the duct 11.

The creation of such a connection allows, as represented in figure 13, the flow of air from the chamber 13 to the chamber 12 through the duct 11, as indicated by the arrows 30 and the consequent flow of liquid R into the corresponding cell 4, through the supply duct 7, as represented by the arrows 31.

This determines the rise of the level L of the electrolyte E in the corresponding cell 4.

When the level L of the electrolyte E reaches the lower end 10a of the tubular element 10 the connection of the two chambers 12 and 13 is interrupted and the air, not being able to flow into the chamber 12, prevents the liquid R from falling through the supply duct 7. This brings the level L of electrolyte E back to the initial value shown in figure 12 thus obtaining the automatic restoring of the level L of electrolyte E in the cell 4 involved.

For accumulators that are put on sale in the dry-charged state the accumulator can more usefully be constructed in the variant indicated in figure 6. In such a case the filling of the cells with the electrolyte shall be carried out at the time of sale of the accumulator through the holes 20 together with that of the reservoir 6.

From that which has been stated it is clear how the proposed solution allows an accumulator to be realised that autonomously takes care of keeping the level L of the electrolyte E inside each cell 4 substantially constant and above the plates 5 preventing the development of processes of deterioration of the plates 5.

Again advantageously, the automatic and continuous control of the level of the electrolyte allows the head 32, visible in figure 12, on the plates 5, i.e. the difference in level between the free surface of the electrolyte E and the upper level of the plates 5, to be reduced.

This advantageously allows the height 16 of the cell 4 and therefore the overall bulk of the accumulator to be reduced or else, with the same size of the cell 4, it allows the height of the plates 5 to be increased and therefore the specific performance of the accumulator to be improved.

Again advantageously, this allows accumulators to be realised that can be used in environments with very hot climates substantially reducing the number of maintenance interventions per unit time.

The proposed solution also allows the maintenance operation to be simplified. In such a circumstance, the operator must, indeed, exclusively fill the reservoir, which shall automatically take care of restoring the levels of electrolyte of the various cells, where necessary.

Therefore, it is not necessary to take care of the checking and possible manual restoring of the level of the electrolyte of each single cell. The checking of the presence of topping up liquid R in the reservoir 6, indeed, ensures that the level of the electrolyte in the cells is optimal, thus allowing the optical detection devices of the levels in each cell with which some accumulators are provided to also be eliminated.

Advantageously, the presence of the reservoir 7 in the accumulator allows the number of maintenance interventions per unit time to be decreased whilst still ensuring the optimal operating conditions of the accumulator.

It should be observed that, considering the water consumption of current accumulators, an accumulator provided with the cover of the invention equipped with a suitable reservoir, during the course of its working life does not require topping up operations even in extreme temperature conditions.

Again advantageously, the proposed solution, maintaining the optimal level of electrolyte in the various cells and increasing the time interval between one maintenance intervention and the next, allows plates with alloys that promote water consumption to also be used. In particular, the proposed solution allows the use of antimony alloys in the positive plates maintaining the aforementioned advantages relative to the cyclability of the plates themselves.

It is also important to note that the cover and the relative accumulator can be realised of a size conforming to the standards foreseen for accumulators object of the present invention.

Although the invention has been described with reference to the attached tables of drawings, it can undergo modifications in the embodiment step, all of which are covered by the same inventive concept expressed by the claims shown hereafter and therefore protected by the present patent.

## Claims

1. Cover (1, 101, 102, 103, 104, 105) for an electric accumulator (100) adapted to be integral with the container (2) of said accumulator (100), said cover (1, 101, 102, 103, 104, 105) comprising:
- at least one reservoir (6), adapted to contain a topping up liquid (R) of the electrolyte (E) present in each of the one or more cells (4) of said accumulator (100), communicating through at least one supply duct (7) of said topping up liquid (R) with said one or more cells (4);
- control means (9) of the level (L) of said electrolyte (E) in each of said one or more cells (4) adapted to prevent/allow the flow of said topping up liquid (R) through said at least one supply duct (7) when the corresponding level (L) of said electrolyte (E) is higher/lower than at least one predetermined level (S);
- at least one discharge duct (21) of the gases that form inside each of said one or more cells (4); **characterised in that** said at least one discharge duct (21) comprises at least one collector duct (24) communicating with at least one of said one or more cells (4); and **in that** said at least one collector duct (24) communicates with a plurality of accumulation chambers (25) each communicating with one of said one or more cells (4) through at least one corresponding vent channel (26).

2. Cover (1, 101, 102, 103, 104, 105) according to claim 1) **characterised in that** said control means (9) of the level (L) comprise at least one tubular element (10), the duct (11) of which is adapted to hydraulically connect, or not, according to the level (L) of said electrolyte (E), the air chambers (12, 13) that are defined in said at least one reservoir (6) and in each of said one or more cells (4) according to the various levels (L) of electrolyte (E).

3. Cover (1, 101, 102, 103, 104, 105) according to claim 2) **characterised in that** said air chamber (12) of said at least one reservoir (6) is defined by the surface of the free surface of said topping up liquid (R), by the upper wall (61), and by the portions of side wall (62) of said at least one reservoir (6), emerging from said topping up liquid (R), when the accumulator (100) is in working position.

4. Cover (1, 101, 102, 103, 104, 105) according to claim 2) or 3) **characterised in that** said air chamber (13) of said one or more cells (4) is defined by the surface of the free surface of said electrolyte (E), by the upper wall (41), and by the portions of side wall (42) of said one or more cells (4) emerging from said electrolyte (E) when the accumulator (100) is in working position.

5. Cover (1, 101, 102, 103, 104, 105) according to any one of claims 2) to 4) **characterised in that** said predetermined level (S) of said electrolyte (E) in each of said one or more cells (4) is substantially equal to the height (16) of said cell (4) minus the length (15) of the lower end (10a) of the corresponding one of said at least one tubular element (10) with respect to the upper wall (41) of said cell (4).

6. Cover (101) according to claim 1) **characterised in that** said control means (9) of the level (L) of electrolyte (E) comprise at least one float (18) mechanically connected to a shaft (19) slidably coupled with a guide element.

7. Cover (104, 105) according to any one of the previous claims **characterised in that** said at least one collector duct (24) has at least one wall provided with tilted planes (27, 28).

8. Cover (104, 105) according to any one of the previous claims **characterised in that** each of said accumulation chambers (25) has at least one wall provided with tilted planes (27, 28).

9. Cover (104, 105) according to claim 7) or 8) **characterised in that** said tilted planes (27, 28) define one or more tanks (29, 30) communicating with each other.

10. Cover (103, 104, 105) according to any one of claims 1) to 9) **characterised in that** in said at least one discharge duct (21) at least one over-pressure valve is arranged (28).

11. Cover (103, 104, 105) according to claim 10) **characterised in that** the opening pressure of said at least one over-pressure valve (28) is no less than the pressure exerted by said electrolyte (E) on said at least one over-pressure valve when said accumulator (100) is turned upside down.

12. Cover (103, 104, 105) according to any one of claims 1) to 11) **characterised in that** said at least one discharge duct (21) has at least one anti-explosion device is arranged.

13. Cover (1, 101, 102, 103, 104, 105) according to any one of the previous claims **characterised in that** said at least one reservoir (6) is provided with at least one filling hole (8) for filling said at least one reservoir (6) that can be closed by at least one corresponding cap (81).

14. Cover (1, 101, 102, 103, 104, 105) according to any one of the previous claims **characterised in that** it comprises a main body (1a) and at least one closing element (1b).

15. Cover 102, 103, 104, 105) according to any one of the previous claims **characterised in that** it is provided with at least one filling, inspection and topping up hole (20) for each of said one or more cells (4), that can be closed through a closing cap (20a).

16. Cover (102, 103, 104, 105) according to claim 15) and any one of claims 2) to 5) **characterised in that** said at least one filling, inspection and topping up hole (20) is realised in correspondence of said at least one tubular element (10), said cap (20a) having at least one opening (20b) adapted to not obstruct said duct (11).

17. Electric accumulator (100) comprising:
- a container (2) provided on the inside with one or more cells (4) each adapted to house at least one plate group (5) of said accumulator (100) and to contain the electrolyte (E);
- at least one cover (1, 101, 102, 103, 104, 105) adapted to close said container (2); **characterised in that** said cover (1, 101, 102, 103, 104, 105) is realised according to any one of claims 1) to 16).

## Patentansprüche

1. Deckel (1, 101, 102, 103, 104, 105) für einen elektrischen Akkumulator (100), der dazu geeignet ist, mit dem Behälter (2) des Akkumulators (100) integriert zu sein, wobei der Deckel (1, 101, 102, 103, 104, 105) Folgendes umfasst:
- zumindest ein Reservoir (6), das dazu geeignet ist, eine Nachfüllflüssigkeit (R) des Elektrolyten (E), der in jeder der einen oder mehreren Zellen (4) des Akkumulators (100) anwesend ist, zu enthalten und über zumindest eine Versorgungsleitung (7) für die Nachfüllflüssigkeit (R) mit der einen oder den mehreren Zellen (4) kommuniziert;
- Regelungsmittel (9) für den Pegelstand (L) des Elektrolyten (E) in jeder der einen oder mehreren Zellen (4), die dazu geeignet sind, das Fließen der Nachfüllflüssigkeit (R) durch die zumindest eine Versorgungsleitung (7) zu ermöglichen/verhindern, wenn der entsprechende Pegelstand (L) des Elektrolyten (E) höher/niedriger als zumindest ein vorbestimmter Pegelstand (S) ist;
- zumindest eine Abführleitung (21) für die Gase, die sich im Inneren einer jeden der einen oder mehreren Zellen (4) bilden;
**dadurch gekennzeichnet, dass** die zumindest eine Abführleitung (21) zumindest eine Sammelleitung (24) umfasst, die mit zumindest einer der einen oder mehreren Zellen (4) kommuniziert, und dass die zumindest eine Sammelleitung (24) mit einer Vielzahl an Akkumulationskammern (25) kommuniziert, die jeweils über zumindest einen entsprechenden Lüftungskanal (26) mit einer der einen oder mehreren Zellen (4) kommunizieren.

2. Deckel (1, 101, 102, 103, 104, 105) nach Anspruch 1), **dadurch gekennzeichnet, dass** das Regelungsmittel (9) für den Pegelstand (L) zumindest ein röhrenförmiges Element (10) umfasst, wobei dessen Leitung (11) dazu geeignet ist, je nach Pegelstand (L) des Elektrolyten (E) die Luftkammern (12, 13), die im zumindest einen Reservoir (6) und in jeder der einen oder mehreren Zellen (4) den verschiedenen Pegelständen (L) des Elektrolyten (E) entsprechend definiert sind, hydraulisch zu verbinden oder nicht zu verbinden.

3. Deckel (1, 101, 102, 103, 104, 105) nach Anspruch 2), **dadurch gekennzeichnet, dass** die Luftkammer (12) des zumindest einen Reservoirs (6) von der Fläche der freiliegenden Oberfläche der Nachfiillflüssigkeit (R), der oberen Wand (61) und von Abschnitten der Seitenwände (62) des zumindest einen Reservoirs (6), die aus der Nachfüllflüssigkeit (R) herausragen, wenn der Akkumulator (100) in seiner Betriebstellung ist, definiert ist.

4. Deckel (1, 101, 102, 103, 104, 105) nach Anspruch 2) oder 3), **dadurch gekennzeichnet, dass** die Luftkammer (13) der einen oder mehreren Zellen (4) von der Fläche der freiliegenden Oberfläche des Elektrolyten (E), der oberen Wand (41) und von Abschnitten der Seitenwände (42) der einen oder mehreren Zellen (4), die aus dem Elektrolyten (E) herausragen, wenn der Akkumulator (100) in seiner Betriebstellung ist, definiert ist.

5. Deckel (1, 101, 102, 103, 104, 105) nach einem der Ansprüche 2) bis 4),
**dadurch gekennzeichnet, dass** der vorbestimmte Pegelstand (S) des Elektrolyten (E) in jeder der einen oder mehreren Zellen (4) im Wesentlichen der Höhe (16) der Zelle (4) minus der Länge (15) des unteren Endes (10a) des entsprechenden, zumindest einen röhrenförmigen Elements (10) in Bezug auf die obere Wand (41) der Zelle (4) entspricht.

6. Deckel (101) nach Anspruch 1), **dadurch gekennzeichnet, dass** das Regelungsmittel (9) des Pegelstands (L) des Elektrolyten (E) zumindest einen Schwimmer (18) umfasst, der mit einem Schaft (19) mechanisch verbunden ist, welcher mit einem Führungselement gleitend gekoppelt ist.

7. Deckel (104, 105) nach einem der vorangegangenen Ansprüche, **dadurch gekennzeichnet, dass** die zumindest eine Sammelleitung (24) zumindest eine Wand mit schrägen Ebenen (27, 28) aufweist.

8. Deckel (104, 105) nach einem der vorangegangenen Ansprüche, **dadurch gekennzeichnet, dass** jede der Akkumulationskammern (25) zumindest eine Wand mit schrägen Ebenen (27, 28) aufweist.

9. Deckel (104, 105) nach Anspruch 7) oder 8), **dadurch gekennzeichnet, dass** die schrägen Ebenen (27, 28) einen oder mehrere Tanks (29, 30) definieren, die miteinander kommunizieren.

10. Deckel (103, 104, 105) nach einem der Ansprüche 1) bis 9), **dadurch gekennzeichnet, dass** in der zumindest einen Abführleitung (21) zumindest ein Überdruckventil (28) angeordnet ist.

11. Deckel (103, 104, 105) nach Anspruch 10), **dadurch gekennzeichnet, dass** der Öffnungsdruck des zumindest einen Überdruckventils (28) nicht geringer ist als der vom Elektrolyten (E) auf das zumindest eine Überdruckventil (28) ausgeübte Druck, wenn der Akkumulator (100) auf den Kopf gestellt wird.

12. Deckel (103, 104, 105) nach einem der Ansprüche 1) bis 11), **dadurch gekennzeichnet, dass** die zumindest eine Abführleitung (21) zumindest eine Explosionsschutzvorrichtung aufweist.

13. Deckel (1, 101, 102, 103, 104, 105) nach einem der vorangegangenen Ansprüche, **dadurch gekennzeichnet, dass** das zumindest eine Reservoir (6) mit zumindest einem Befüllloch (8) zum Befüllen des zumindest einen Reservoirs (6) ausgestattet ist, das mit zumindest einer entsprechenden Kappe (81) verschlossen werden kann.

14. Deckel (1, 101, 102, 103, 104, 105) nach einem der vorangegangenen Ansprüche, **dadurch gekennzeichnet, dass** er einen Hauptkörper (1a) und zumindest ein Verschlusselement (1b) umfasst.

15. Deckel (102, 103, 104, 105) nach einem der vorangegangenen Ansprüche,
**dadurch gekennzeichnet, dass** er mit zumindest einem Befüll-, Prüf- und Nachfüllloch (20) für jede der einen oder mehreren Zellen (4) ausgestattet ist, das mit einer Verschlusskappe (20a) verschlossen werden kann.

16. Deckel (102, 103, 104, 105) nach Anspruch 15) und einem der Ansprüche 2) bis 5), **dadurch gekennzeichnet, dass** das zumindest eine Befüll-, Prüf- und Nachfüllloch (20) in Übereinstimmung mit dem zumindest einen röhrenförmigen Element (10) ausgebildet ist, wobei die Kappe (20a) mindestens eine Öffnung (20b) aufweist, die dazu geeignet ist, die Leitung (11) nicht zu blockieren.

17. Elektrischer Akkumulator (100), umfassend:
- einen Behälter (2), der im Inneren mit einer oder mehreren Zellen (4) ausgestattet ist, die jeweils dazu geeignet sind, zumindest eine Elektrodengruppe (5) des Akkumulators (100) aufzunehmen und den Elektrolyten (E) zu enthalten;
- zumindest einen Deckel (1, 101, 102, 103, 104, 105), der dazu geeignet ist, den Behälter (2) zu verschließen,
**dadurch gekennzeichnet, dass** der Deckel (1, 101, 102, 103, 104, 105) nach einem der Ansprüche 1) bis 16) ausgebildet ist.

## Revendications

1. Couvercle (1, 101, 102, 103, 104, 105) pour un accumulateur électrique (100) indiqué pour être solidaire du conteneur (2) dudit accumulateur (100), ledit couvercle (1, 101, 102, 103, 104, 105) comprenant :
- au moins un réservoir (6), indiqué pour contenir un liquide de remplissage (R) de l'électrolyte (E) présent dans chacune d'une ou plusieurs cellules (4) dudit accumulateur (100), communiquant au moyen d'au moins un conduit d'approvisionnement (7) dudit liquide de remplissage (R) avec ladite/lesdites une ou plusieurs cellules (4) ;
- des moyens de contrôle (9) du niveau (L) dudit électrolyte (E) dans chacune des desdites une ou plusieurs cellules (4) indiqués pour empêcher/garantir l'écoulement dudit liquide de remplissage (R) au moyen dudit au moins un conduit d'approvisionnement (7) quand le niveau correspondant (L) dudit électrolyte (E) est supérieur/inférieur d'au moins un niveau prédéterminé (S) ;
- au moins un conduit d'évacuation (21) des gaz qui se forment à l'intérieur de chacune desdites une ou plusieurs cellules (4) ;
**caractérisé en ce que** ledit au moins un conduit d'évacuation (21) comprend au moins un conduit collecteur (24) communiquant avec au moins une desdites une ou plusieurs cellules (4), et **en ce que** ledit au moins un conduit collecteur (24) communique avec une pluralité de chambres d'accumulation (25) chacune communiquant avec une desdites une ou plusieurs cellules (4) au moyen d'au moins un canal d'aération correspondant (26).

2. Couvercle (1, 101, 102, 103, 104, 105) selon la revendication 1) **caractérisé en ce que** lesdits moyens de contrôle (9) du niveau (L) comprennent au moins un élément tubulaire (10), le conduit (11) duquel est indiqué pour relier hydrauliquement, ou non, selon le niveau (L) dudit électrolyte (E), les chambres d'air (12, 13) qui sont définies dans ledit au moins un réservoir (6) et dans chacune desdites une ou plusieurs cellules (4) selon les différents niveaux (L) d'électrolyte (E).

3. Couvercle (1, 101, 102, 103, 104, 105) selon la revendication 2) **caractérisé en ce que** ladite chambre d'air (12) dudit au moins un réservoir (6) est définie par la surface de la surface libre dudit liquide de remplissage (R), par la paroi supérieure (61) et par les parties de la paroi latérale (62) dudit au moins un réservoir (6), sortant dudit liquide de remplissage (R), quand l'accumulateur (100) se trouve en position de travail.

4. Couvercle (1, 101, 102, 103, 104, 105) selon la revendication 2) ou 3)
**caractérisé en ce que** ladite chambre d'air (13) desdites au moins une ou plusieurs cellules (4) est définie par la surface de la surface libre dudit électrolyte (E), par la paroi supérieure (41) et par les parties de la paroi latérale (42) desdites au moins une ou plusieurs cellules (4), sortant dudit électrolyte (E), quand l'accumulateur (100) se trouve en position de travail.

5. Couvercle (1, 101, 102, 103, 104, 105) selon l'une quelconque des revendications de la 2) à la 4) **caractérisé en ce que** ledit niveau prédéterminé (S) dudit électrolyte (E) dans chacune desdites une ou plusieurs cellules (4) est essentiellement égal à la hauteur (16) de ladite cellule (4) moins la longueur (15) de l'extrémité inférieure (10a) de celle correspondante dudit au moins un élément tubulaire (10) par rapport à la paroi supérieure (41) de ladite cellule (4).

6. Couvercle (101) selon la revendication 1) **caractérisé en ce que** lesdits moyens de contrôle (9) du niveau (L) d'électrolyte (E) comprennent au moins un flotteur (18) relié mécaniquement à un arbre (19) relié d'une manière coulissante avec un élément de guidage.

7. Couvercle (104, 105) selon l'une quelconque des revendications précédentes
**caractérisé en ce que** ledit au moins un conduit collecteur (24) présente au moins une paroi munie de plans inclinés (27, 28).

8. Couvercle (104, 105) selon l'une quelconque des revendications précédentes
**caractérisé en ce que** chacune desdites chambres d'accumulation (25) présente au moins une paroi munie de plans inclinés (27, 28).

9. Couvercle (104, 105) selon la revendication 7) ou 8) **caractérisé en ce que** lesdits plans inclinés (27, 28) définissent un ou plusieurs réservoirs (29, 30) communiquant l'un avec l'autre.

10. Couvercle (103, 104, 105) selon l'une quelconque des revendications de la 1) à la 9) **caractérisé en ce que** dans ledit au moins un conduit d'évacuation (21) au moins une vanne de surpression (28) est positionnée.

11. Couvercle (103, 104, 105) selon la revendication 10) **caractérisé en ce que** la pression d'ouverture de ladite au moins une vanne de surpression (28) n'est pas inférieure à la pression exercée par ledit électrolyte (E) sur ladite au moins une vanne de surpression quand ledit accumulateur (100) est renversé.

12. Couvercle (103, 104, 105) selon l'une quelconque des revendications de la 1) à la 11) **caractérisé en ce que** ledit au moins un conduit d'évacuation (21) présente au moins un dispositif anti-explosion.

13. Couvercle (1, 101, 102, 103, 104, 105) selon l'une quelconque des revendications précédentes **caractérisé en ce que** ledit au moins un réservoir (6) est muni d'au moins un orifice de remplissage (8) pour remplir ledit au moins un réservoir (6) qui peut être fermé par au moins un bouchon correspondant (81).

14. Couvercle (1, 101, 102, 103, 104, 105) selon l'une quelconque des revendications précédentes **caractérisé en ce qu'**il comprend un corps principal (1a) et au moins un élément de fermeture (1b).

15. Couvercle (102, 103, 104, 105) selon l'une des revendications précédentes
**caractérisé en ce qu'**il est muni d'au moins un orifice de remplissage et d'inspection (20) pour chacune desdites une ou plusieurs cellules (4), qui peut être fermé par un bouchon de fermeture (20a).

16. Couvercle (102, 103, 104, 105) selon la revendication 15) et l'une quelconque des revendications de la 2) à la 5) **caractérisé en ce qu'**au moins un orifice de remplissage et d'inspection (20) est réalisé à hauteur dudit au moins un élément tubulaire (10), ledit bouchon (20a) ayant au moins une ouverture (20b) indiquée pour ne pas obstruer ledit conduit (11).

17. Accumulateur électrique (100) comprenant :
- un conteneur (2) muni à l'intérieur d'une ou plusieurs cellules (4) chacune indiquée pour loger au moins un jeu de platines (5) dudit accumulateur (100) et pour contenir l'électrolyte (E) ;
- au moins un couvercle (1, 101, 102, 103, 104, 105) indiqué pour fermer ledit conteneur (2) ;
**caractérisé en ce que** ledit couvercle (1, 101, 102, 103, 104, 105) est réalisé selon l'une quelconque des revendications de la 1) à la 16).
